# EUROPEAN PATENT APPLICATION

(11) **EP 0 556 689 A2**
(43) Date of publication of application: **25.08.1993**
(21) Application number: 93101969.9
(22) Date of filing: 12.02.1993
(51) Int. Cl.: G05D 1/03, G05D 1/02

(54) **Device for directional control of a moving vehicle and associated method**

(30) Priority: 21.02.1992 IT MI920387
(71) Applicant: Beltrami, Giovanni, Taino (Varese) (IT); Bonetti, Gianmarco, Castelletto Ticino (Novara) (IT); Bertola, Alessandro, Taino (Varese) (IT)
(72) Inventor: Beltrami, Giovanni, Taino (Varese) (IT); Bonetti, Gianmarco, Castelletto Ticino (Novara) (IT); Bertola, Alessandro, Taino (Varese) (IT)
(74) Representative: Lecce, Giovanni

(57) **Abstract**

Device for directional control of the lateral deviation of a moving vehicle to follow one or more predetermined and parallel paths without prearranged reference elements and comprising a direction sensor (CPS), at least one incremental sensor (GS,GD) of the distance travelled by the vehicle (1), and calculation means (PROC) for determining periodically the component with algebraic sign of the lateral deviation and the resulting transverse deviation. This information can be used as an indication for the driver or for control of automatic guidance means for the vehicle (1).

## Description

The present invention relates to a device for directional control of a moving vehicle.

More specifically the present invention relates to a device for directional control and lateral movement of a moving machine.

Another purpose of the present invention is a method of directional control of a moving vehicle.

The invention is illustrated with specific reference to use in the field of agricultural works, however it finds advantageous application also in the execution of road works, cable and duct laying and in general for control of the path of moving machines.

For the execution of agricultural, road and in general earth works it is often necessary that the run of the moving means follow a well defined path which can be straight, curved, broken or formed in various manners. As occurs in plowing, spraying, sowing and harvesting, the vehicle must repeat said run in a parallel manner repeatedly at a predetermined distance.

To this end there are presently used reference signals prearranged on the ground as for example rods or stakes, sighting lines and alignment marks or actual row-tracing systems capable of leaving on the ground a continuous guide line, e.g. of foam.

These systems involve preliminary and repeated operations and additional equipment which lengthen the time and cost of the work and are not always effective, e.g. in case of fog, or applicable, as in case of rain, rice paddies, marshy ground, etc.

There is thus a need, in particular in agricultural works, to be able to follow one or more predetermined paths parallel and equidistant from each other in a simple manner without having to arrange reference elements on the land in advance.

The purpose of the present invention is to overcome the limitations and shortcomings described above of the known art.

More specifically the purpose of the present invention is to provide a completely independent control device which would avoid the need to install fixed guide or alignment references.

Another purpose of the present invention is to provide a completely independent control device supplying directly to the operator in the cab or to an automatic guidance system the indications designed to hold the vehicle on the predetermined path.

In its most general aspect the device of the present invention causes lateral swerving or deviation of the vehicle from a predetermined path and supplies to the driver or to an automatic guidance system the information necessary for correcting movement.

In accordance with the present invention the device for directional control of a moving vehicle is characterized in that it comprises in combination:
- a direction sensor integral with the vehicle body and capable of generating a signal representing the instantaneous direction of the vehicle,
- means of comparison which receive in input the signal produced by said direction sensor and a signal representing the desired direction of the vehicle,
- at least one incremental sensor mounted on the vehicle and capable of generating a signal representing the distance travelled by the vehicle,
- calculation means connected to said comparison means and at least one incremental sensor for determining periodically the component with sign of the lateral deviation or distance travelled by the vehicle transversely to said desired direction, said calculation means incorporating summing means for said transverse deviation to determine the resulting transverse deviation,
- display means for representation of said lateral deviation, and
- automatic vehicle guidance means whose inputs are connected to said comparison means and to said summing means.

A subject matter of the present invention is also a method for directional control of a moving vehicle characterized in that it comprises the following operational phases:
a. determination of the orientation of the vehicle relative to a desired direction,
b. periodic measurement of the partial space travelled in equal time intervals,
c. determination of the component of said partial space along a direction perpendicular to the desired direction,
d. algebraic summing of said partial space components to find the total transverse shifting,
e. supplying to the operator of the information to act correctly on the steering members to nullify the transverse shifting during forward travel or shifting from the pre-set value d during reversing,
f. acting on the steering members of the vehicle to nullify said total transverse shifting during forward travel.

Additional advantageous characteristics are set forth in the appended claims.

The construction and operational characteristics of the device for directional control of a moving vehicle of the present invention are clarified in the detailed description given below in which reference is made to a preferred but nonlimiting embodiment illustrated in the annexed drawings wherein:
FIG. 1 shows a schematic perspective view of a vehicle for the performance of agricultural works incorporating the device for directional control of the present invention,
FIG. 2 shows a diagram of a possible path planned for the vehicle of FIG. 1,
FIG. 3 shows a block diagram of an embodiment of the device in accordance with the present invention, and
FIG. 4 shows a schematic view of a panel (B) which contains the controls and functions of the device of the present invention.

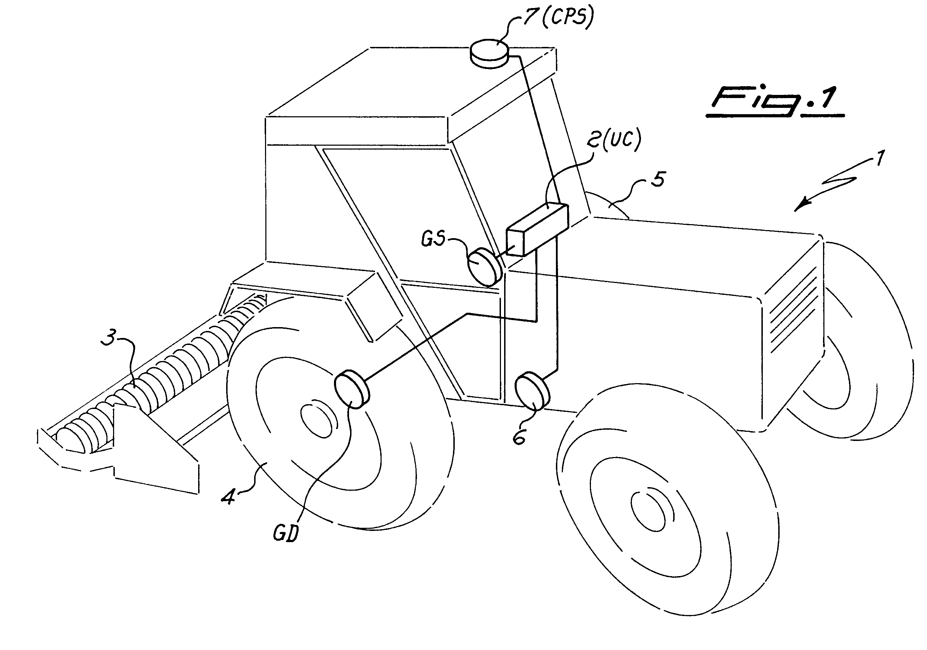

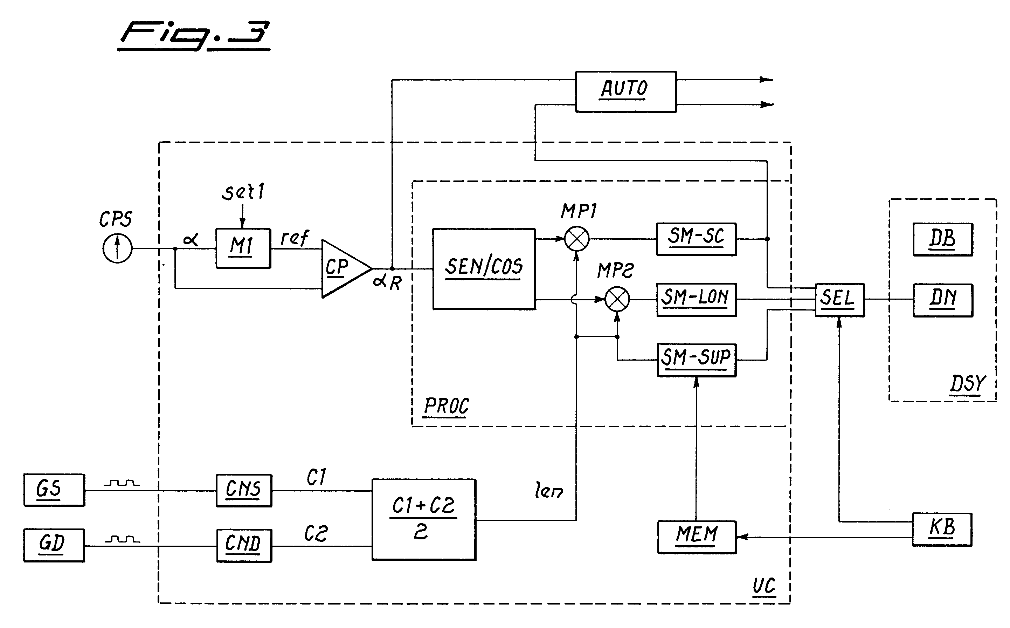

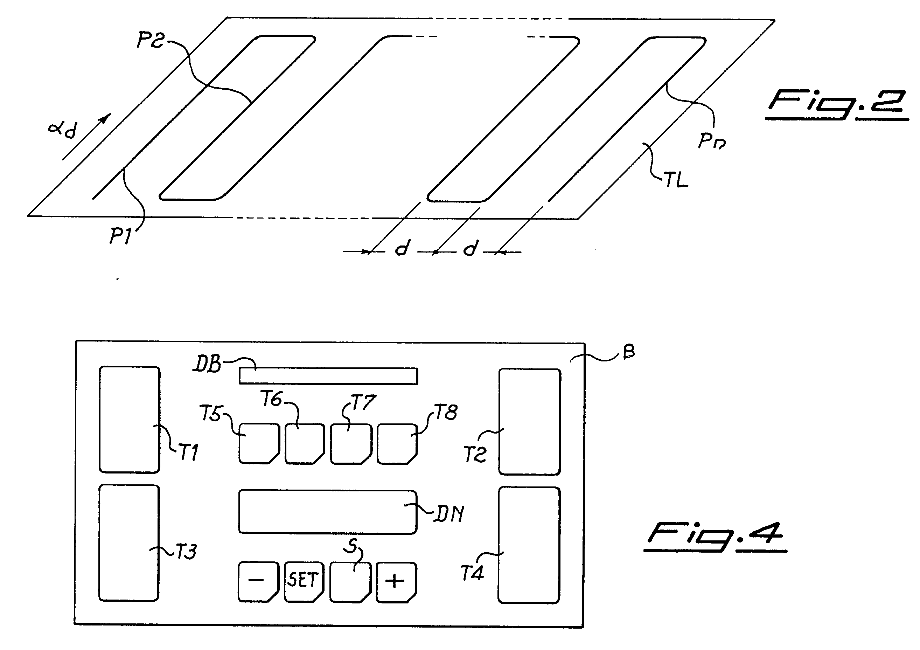

With reference to FIG. 1 the device in accordance with the present invention comprises a central unit (UC) housed in a container (2) located near the control panel of a tractor (1) which draws an implement (3), a directional sensor (7) (CPS) of the absolute type, preferably located on the roof of the vehicle far from ferrous masses, and at least one incremental sensor of vehicle movement. The last named sensor can be provided by a pair of sensors (GS,GD) affixed to the two rear wheels (4,5) of the vehicle (1) or alternatively by a sensor (6) mounted on the vehicle drive shaft (1). The sensors are connected to the central unit (UC) by appropriate cables indicated schematically in FIG. 1. The container (2) which contains the central unit (UC) is provided also with a panel (B) (illustrated in greater detail in FIG. 4) for display of the information and input of commands.

FIG. 2 illustrates schematically a typical situation of employment of the tractor (1) in agricultural works in which land to be processed (TL) is travelled over in accordance with parallel passes (P1-Pn) separated by a distance (d) between them, the first pass (P1) serving for learning and memorisation of the desired direction (αδ).

With reference to the block diagram of FIG. 3, to the central unit (UC) is connected the output of a direction sensor (CPS) integral with the vehicle body (1) and capable of generating a signal representing the instantaneous direction (α) of the vehicle. The sensor (CPS) is preferably the magnetic type and capable of outputting an electronic signal proportionate to the orientation of the vehicle in relation to terrestrial magnetic north. A sensor of this type is known for example in navigation by the denomination electronic compass. As an alternative the sensor can be the gyroscopic or other type provided it is designed to determine orientation in relation to a reference direction. As concerns the electrical signal, it can be of the analog type, e.g. voltage, or the digital type, appropriately codified.

The signal (α) produced by the direction sensor (CPS) is taken to the input of a comparison device represented schematically by a comparator (CP). At the other input of the comparator (CP) there is a signal (ref) representing the desired direction of the vehicle which is obtained from a direction memory (M1) loaded by the command (set 1).

Preferably the memory (M1) contains conventional circuitry which allows memorisation as the value (ref) of the average value of the direction in the interval in which the enabling was maintained. In this manner it is possible to achieve self-learning by the device through enablement at the beginning Of the first pass or disablement at the end of said pass.

The output (αR) of the comparator (CP) is taken to an automatic guide member (AUTO) discussed below or to a processing unit or converter (SEN/COS) of trigonometric functions which outputs signals proportional to sen αR or cos αR respectively, which then supply values representing the instantaneous transverse shifting and instantaneous longitudinal shifting. While the longitudinal shifting is always positive, the transverse shifting assumes positive or negative values depending on the deviation angle (αR).

To obtain periodically, in accordance with a cyclic procedure the actual values of the partial shifts in accordance with the desired direction and the direction transverse thereto, the outputs of the converter are multiplied in the multipliers (MP1,MP2) by a magnitude (len) representing the distance travelled which is obtained from the sensors (GS,GD) mounted on opposite wheels (4,5) (laterally) of the vehicle. Said sensors are capable of generating a number of impulses proportional to the space travelled by the corresponding wheel (4,5) and the impulses are memorized in two counters (CNS,CND) whose outputs are periodically discharged onto a summing circuit which determines the average value period ((C1+C2)/2) used as a signal representing the distance travelled by the vehicle.

In other words, travel of the vehicle is broken down into partial travels corresponding to equal and successive time intervals (periods), e.g. 0.1 seconds. In a known manner and not illustrated this is achieved by a base clock and counters which supply the necessary timing signals.

The sensors can be encoders or proximity switches, e.g. the Hall type, photoelectric, etc., optionally keyed onto other rotating members of the machine which are integral with the rotation of the wheels, i.e. with vehicle travel.

Employment of two sensors (GS,GD) provides great precision in evaluation of vehicle travel although using simple components easy to install because it is possible to compensate for the sliding effects of one of the wheels, e.g. in mud. In addition, the incremental transducers, combined with the angular deviation, serve for guidance in the 180° reversing phase on a parallel path at distance d, i.e. between adjacent passes.

In an alternative embodiment of the invention there can be used a single sensor, e.g. the sensor (6) of FIG. 1 mounted on the drive shaft, or a Doppler effect sensor or some other type for which average operation is not necessary.

In addition, it is possible to process the instantaneous difference of the impulses supplied by the two sensors (GS,GD) to eliminate the use of the absolute sensor (CPS).

The outputs of the multipliers (MP1,MP2) and the signal (len) are taken to calculation means (PROC) comprising a unit (SM-SC) for determining periodically the algebraic sum of the lateral deviation, i.e. the distance travelled by the vehicle transversely to said desired direction; a unit (SM-LON) for summing periodically also the component of the distance travelled by the vehicle along said reference direction; and a unit (SM-SUP) for calculating periodically also the area processed, the latter receiving also the information on the distance between passes contained in the parameter memory (MEM).

The central unit also calls for a display (DSY) made up of at least one linear display (DB) and/or directional lights for representing the lateral deviation, and a digital display (DN) for display of digital data. Selection is done through the block (SEL) by use of the keyboard (KB) which also serves for input of data and parameters to the central unit. The total lateral deviation signal is also taken to the automatic guidance means (AUTO) which already receive the instantaneous transverse shifting information and are capable of producing in a known manner power signals for automatic guidance of the vehicle by means of solenoid valves, actuators, etc.

FIG. 4 illustrates a preferred embodiment of the panel (B) for the commands and functions of the device in accordance with the present invention.

It comprises:
- the linear display (DB) in the form of a LED bar indicating to the driver the instantaneous angular deviation (αR) in relation to the direction memorized in M1;
- the key T1 for readout zeroing (area, linear travel);
- the key T2 for start/finish command of memorisation of direction for the first pass, pressing which enables and disables the signal set1;
- the keys T3 and T4 for reverse selection, left and right respectively;
- the digital data display (DN) in the form of a digital display, e.g. with six figures;
- the keys - and + for decrease and increase respectively of the settable digital data (which are displayed on DN during setting);
- the key SET for enablement of the selected settings;
- the key S for selection of the displayed datum;
- the warning lights from T5 to T8 for indication of the reading of covered area, travel, lateral deviation and equipment length.

The device is preferably provided by means of a microprocessor or a programmed micro controller.

Although the invention has been described in conjunction with specific embodiments it is evident that many alternatives and variations will be apparent to those skilled in the art in light of the foregoing description. Accordingly, the invention is intended to embrace all of the alternatives and variations that fall within the spirit and scope of the appended claims.

## Claims

1. Device for directional control of a moving vehicle (1) characterized in that it comprises in combination:
- a direction sensor (CPS) integral with the vehicle body and capable of generating a signal representing the instantaneous direction (α) of the vehicle (1);
- comparison means (CP) which receive at input the signal (α) produced by said direction sensor (CPS) and a signal (ref) representing the desired direction of the vehicle;
- at least one incremental sensor (GS,GD) mounted on the vehicle capable of generating a signal representing the distance travelled by the vehicle (1);
- calculation means (PROC) connected to said comparison means (CP) and at least one incremental sensor to determine periodically the component with sign of the lateral deviation or distance travelled by the vehicle transversely to said desired direction, said calculation means incorporating summing means (SM-SC) for said transverse deviation to determine the resulting transverse deviation;
- display means (DSY) for representing said lateral deviation;
- automatic guidance means for the vehicle (1) whose inputs are connected to said comparison means (CP) and to said summing means (SM-SC).

2. Device in accordance with claim 1 characterized in that it comprises in addition a direction memory (M1) connected to said direction sensor (CPS) and actuated selectively (control set1) to memorise the direction information supplied by the sensor as the desired vehicle direction, said comparison means (CP) comprising a comparator (CP) whose inputs are connected to said direction sensor (CPS) and to said memory (M1) respectively.

3. Device in accordance with claim 1 or 2 characterized in that it calls for two incremental sensors (GS,GD) mounted on opposite wheels (4,5) of the vehicle and capable of generating a number of impulses proportional to the space travelled by the corresponding wheel, the outputs of said sensors being connected to two counters (CNS,CND) whose outputs (C1,C2) are in turn connected to a summing circuit which determines their average value ((C1+C2)/2) using as the signal (len) representing the distance travelled by the vehicle (1).

4. Device in accordance with any of the above claims characterized in that said calculation means (PROC) comprise also means (SM-LON) for periodically summing also the component of the distance travelled by the vehicle along said reference direction.

5. Device in accordance with claim 4 characterized in that said calculation means (PROC) comprise means (SM-SUP) for periodically calculating also the surface area worked.

6. Device in accordance with any one of the above claims characterized in that the display means (DSY) comprise a linear display (DB).

7. Device in accordance with claim 6 characterized in that said linear display (DB) comprises a LED and/or lamp bar.

8. Device in accordance with any one of the above claims characterized in that said calculation means (PROC) comprise a processing unit (SEN/COS) for trigonometric functions having its input connected to said comparator (CP) and a pair of multipliers (MP1,MP2) each of which receives at its input said signal (len) representing the distance travelled by the vehicle (1), and one of the outputs of said processing unit (SEN/COS) respectively.

9. Device in accordance with any one of the above claims characterized in that it also comprises a keyboard (KB) for setting the parameters and a memory (MEM) containing the setting data and the parameters set by means of said keyboard.

10. Device in accordance with any one of the above claims characterized in that it comprises a selecting device (SEL) controlled by the keyboard (KB) for setting the parameters and selection of the data to be displayed on said digital display (DN).

11. Method for directional control of a moving vehicle (1) characterized in that it comprises the following operations:
a. determination of the orientation of the vehicle relative to a desired direction,
b. periodic measurement of the partial space travelled in equal time intervals,
c. determination of the component of said partial space along a direction perpendicular to the desired direction,
d. algebraic summing of said partial space components to find the total transverse shifting,
e. supplying the operator with the information to act correctly on the steering members to nullify the transverse shifting in the advancing stage or shifting from the pre-set value d in the reversing stage, and
f. acting on the steering members of the vehicle to nullify said total transverse shifting during forward travel.
